# EUROPEAN PATENT APPLICATION

(11) **EP 4 550 440 A1**
(43) Date of publication of application: **07.05.2025**
(21) Application number: 23830515.5
(22) Date of filing: 30.06.2023
(51) Int. Cl.: H01M 4/13, H01M 10/0525, H01M 10/0585, H01M 10/0583

(54) **ELECTROCHEMICAL DEVICE AND MANUFACTURING METHOD THEREFOR, AND ELECTRONIC DEVICE**

(30) Priority: 01.07.2022 CN 202210763436
(71) Applicant: Ningde Amperex Technology Limited, Ningde, Fujian 352100 (CN)
(72) Inventor: ZHONG, Huawei, Ningde, Fujian 352100 (CN)
(74) Representative: Icosa
(86) International application number: PCT/CN2023/104903
(87) International publication number: WO 2024/002352

(57) **Abstract**

This application provides an electrochemical apparatus, a manufacturing method thereof, and an electronic apparatus. The electrochemical apparatus includes an electrode assembly. The electrode assembly includes a positive electrode plate and a negative electrode plate. The positive electrode plate includes a positive electrode current collector and a first positive electrode active material layer, and the negative electrode plate includes a negative electrode current collector and a first negative electrode active material layer. The first negative electrode active material layer includes a prelithiation region and a non-prelithiation region, where the non-prelithiation region has no area overlapping with the prelithiation region, and the non-prelithiation region is provided on an edge region of the negative electrode plate. This application can reduce the risk of lithium precipitation on the negative electrode plate by adjusting the dimensions of the non-prelithiation region in the edge region of the negative electrode plate, thereby improving the safety and reliability of the electrochemical apparatus.

## Description

This application claims priority to Chinese Patent Application No. 202210763436.0, filed with the China National Intellectual Property Administration on July 01, 2022 and entitled "ELECTROCHEMICAL APPARATUS, MANUFACTURING METHOD THEREOF, AND ELECTRONIC APPARATUS", which is incorporated herein by reference in its entirety.

### TECHNICAL FIELD

This application relates to the field of electrochemical technologies, and in particular, to an electrochemical apparatus, a manufacturing method thereof, and an electronic apparatus.

### BACKGROUND

Lithium-ion batteries feature high operating voltage, high energy density, long cycle life, and wide operating temperature range. These outstanding characteristics have led to widespread application of lithium-ion batteries in three major fields including consumer electronics, power battery, and energy storage.

In order to further improve the energy density of lithium-ion batteries, lithium can be supplemented on surfaces of the negative electrode plates. However, the prelithiation negative electrode plates may be prone to lithium precipitation, especially at the edges, affecting the safety of lithium-ion batteries.

### SUMMARY

This application is intended to provide an electrochemical apparatus, a manufacturing method thereof, and an electronic apparatus, so as to reduce the risk of lithium precipitation in negative electrode plates and improve the safety and reliability of electrochemical apparatuses. Specific technical solutions are as follows:

A first aspect of this application provides an electrochemical apparatus including an electrode assembly, where the electrode assembly includes a positive electrode plate and a negative electrode plate; the positive electrode plate includes a positive electrode current collector and a first positive electrode active material layer disposed on a surface of the positive electrode current collector; the negative electrode plate includes a negative electrode current collector and a first negative electrode active material layer disposed on a surface of the negative electrode current collector; and the first negative electrode active material layer includes a prelithiation region and an non-prelithiation region, the non-prelithiation region being a region located within a region of the first negative electrode active material layer and having no area overlapping with the prelithiation region; where the first negative electrode active material layer has a dimension of B₁ mm in a width direction, the first positive electrode active material layer has a dimension of B₂ mm in the width direction, and distance between an edge of the first negative electrode active material layer extending along a length direction and an adjacent edge of the prelithiation region extending along the length direction is B₄ mm, where 0.15 ≤ B₄ ≤ 1/2 × (B₁ - B₂) + 1.

Beneficial effects of some embodiments of this application are as follows: In this application, an non-prelithiation region is provided on the first negative electrode active material layer in the edge region of the negative electrode plate to reduce the risk of lithium precipitation on the negative electrode plate. During the cycling process of the electrochemical apparatus, the non-prelithiation region allows more lithium ions from the positive electrode to be embedded compared to the prelithiation region, and local capacity ratio in the edge region of the negative electrode plate is increased, allowing accommodation of more lithium ions from the edge of the opposite positive electrode plate. This can reduce the risk of lithium precipitation at the edge of the negative electrode plate in the width direction, thereby enhancing the safety and reliability of the electrochemical apparatus and balancing the energy density within the electrochemical apparatus.

In an embodiment of this application, the first negative electrode active material layer has a dimension of A₁ mm in the length direction, and the first positive electrode active material layer has a dimension of A₂ mm in the length direction; and distance between an edge of the first negative electrode active material layer extending along the width direction and an adjacent edge of the prelithiation region extending along the width direction is A₄ mm, where 0.15 ≤ A₄ ≤ 1/2 × (A₁ - A₂) + 1. Controlling A₄ within the above range can reduce the risk of lithium precipitation at the edge of the negative electrode plate in the length direction, thereby improving the safety and reliability of the electrochemical apparatus.

In an embodiment of this application, the prelithiation region has a dimension of B₃ mm in the width direction, where B₁, B₃, and B₄ satisfy B₄ = (B₁ - B₃)/2. With the above technical solution, the risk of the positive electrode plate exceeding the negative electrode plate in the width direction can be reduced, and the risk of lithium precipitation on the negative electrode plate can be reduced, thereby improving the safety and reliability of the electrochemical apparatus.

In an embodiment of this application, the prelithiation region has a dimension of A₃ mm in the length direction, where A₁, A₃, and A₄ satisfy A₄ = (A₁ - A₃)/2. With the above technical solution, the risk of the positive electrode plate exceeding the negative electrode plate in the length direction can be reduced, and the risk of lithium precipitation on the negative electrode plate can be reduced, thereby improving the safety and reliability of the electrochemical apparatus.

In an embodiment of this application, when viewed from a thickness direction of the negative electrode plate, the prelithiation region has striped portions; along an arrangement direction of multiple striped portions, the striped portion has a dimension of 0.1 mm to 2 mm; and/or in the thickness direction of the negative electrode plate, the striped portion has a thickness of 0.04 µm to 0.5 µm. The negative electrode plate having the above features can improve the initial coulombic efficiency of the negative electrode plate, helping to improve the energy density of the electrochemical apparatus and the manufacturing efficiency of the prelithiation region.

In an embodiment of this application, a material of the prelithiation region includes at least one of lithium carbonate, lithium oxide, lithium nitride, or lithium fluoride. During the lithium supplement process of the negative electrode plate, due to the high activity of lithium metal, it reacts with the surrounding air and undergoes reactions in the formation process of the electrochemical apparatus. As a result, a layer of lithium-containing compound is formed on the surface of the first negative electrode active material layer. The main components of the lithium-containing compound include at least one of lithium carbonate, lithium oxide, lithium nitride, or lithium fluoride. The negative electrode plate having the above features can improve the initial coulombic efficiency of the negative electrode plate, helping to improve the energy density of the electrochemical apparatus. Additionally, the surface resistance of the negative electrode plate can be increased, reducing the risk of short circuits and the short-circuit current. Furthermore, the material covering the prelithiation region on the surface of the negative electrode active material can reduce the risk of damage to the solid electrolyte interface film.

In an embodiment of this application, the first negative electrode active material layer includes a negative electrode active material, and the negative electrode active material includes a silicon-based material, conducive to increasing the energy density of the electrochemical apparatus.

In an embodiment of this application, the electrode assembly is a wound structure, the width direction is an extension direction of a short side of an unwound electrode plate, and the length direction is an extension direction of a long side of the unwound electrode plate, the electrode plate including the positive electrode plate and the negative electrode plate. The wound structure is advantageous for the large-scale and fast manufacturing of the electrode assembly.

In an embodiment of this application, 0.15 ≤ A₄ ≤ 5, and 0.15 ≤ B₄ ≤ 1.75. A₄ and B₄ can be set to satisfy such ranges by setting a larger and suitable margin in the length direction and a smaller and suitable margin in the width direction, which is conducive to improving the manufacturing efficiency and satisfying the manufacturing requirements, further reducing the risk of lithium precipitation on the negative electrode plate and reducing the impact on the capacity of the electrochemical apparatus.

In an embodiment of this application, the electrode assembly is a stacked structure, the width direction is an extension direction of a short side of an electrode plate, and the length direction is an extension direction of a long side of the electrode plate, the electrode plate including the positive electrode plate and the negative electrode plate. The stacked structure facilitates the utilization of space by the electrode assembly, thereby increasing the design capacity of the electrochemical apparatus.

In an embodiment of this application, 0.15 ≤ A₄ ≤ 1.75, and 0.15 ≤ B₄ ≤ 1.6. A₄ and B₄ can be set to satisfy such ranges by setting suitable margins in the length direction and the width direction, thereby reducing the risk of lithium precipitation on the negative electrode plate and reducing the impact on the capacity of the electrochemical apparatus.

A second aspect of this application provides a method for manufacturing the electrochemical apparatus according to the first aspect of this application. The method includes the following steps:
providing the first negative electrode active material layer on the surface of the negative electrode current collector, and providing the prelithiation region and the non-prelithiation region on the first negative electrode active material layer to obtain the negative electrode plate;
providing the first positive electrode active material layer on the surface of the positive electrode current collector to obtain the positive electrode plate; and
assembling the negative electrode plate and the positive electrode plate to obtain the electrode assembly, and packaging the electrode assembly to obtain the electrochemical apparatus, where the first negative electrode active material layer faces the first positive electrode active material layer.

The electrochemical apparatus manufactured using the method provided in the second aspect of this application can reduce the risk of lithium precipitation on the negative electrode plate and improve the safety and reliability of the lithium-ion battery.

In an embodiment of this application, the process of assembling the electrode assembly includes: stacking the negative electrode plate and the positive electrode plate to obtain the electrode assembly, or stacking the negative electrode plate and the positive electrode plate and winding the resulting stack to obtain the electrode assembly.

In an embodiment of this application, at least one of lithium foil or lithium powder is used on the surface of the first negative electrode active material layer to provide the prelithiation region on the first negative electrode active material layer. With the prelithiation region provided in the above manner, the initial coulombic efficiency of the negative electrode plate can be improved, helping to improve the energy density of the electrochemical apparatus.

A third aspect of this application provides an electronic apparatus including the electrochemical apparatus according to the first aspect of this application. The electrochemical apparatus provided in this application has good safety and reliability, so the electronic apparatus provided in this application also has good safety and reliability.

This application provides an electrochemical apparatus, a manufacturing method thereof, and an electronic apparatus. The non-prelithiation region is provided in the first negative electrode active material layer in the edge region of the negative electrode plate to reduce the risk of lithium precipitation on the negative electrode plate. The non-prelithiation region allows more lithium ions from the positive electrode to be embedded compared to the prelithiation region. During the cycling process of the electrochemical apparatus, local capacity ratio in the edge region of the negative electrode plate is increased, allowing accommodation of more lithium ions from the edge of the opposite positive electrode plate. This can reduce the risk of lithium precipitation at the edge of the negative electrode plate in the width direction, thereby enhancing the safety and reliability of the electrochemical apparatus. Certainly, when any one of the products or methods of this application is implemented, all advantages described above are not necessarily demonstrated simultaneously.

### BRIEF DESCRIPTION OF DRAWINGS

To describe the technical solutions of this application more clearly, the following briefly describes the accompanying drawings required for describing the embodiments. Apparently, the accompanying drawings in the following description show merely some embodiments of this application.
FIG. 1 is a schematic structural diagram of an electrode assembly according to an embodiment of this application;
FIG. 2 is a schematic structural diagram of a positive electrode plate according to an embodiment of this application;
FIG. 3 is a schematic structural diagram of a negative electrode plate according to an embodiment of this application;
FIG. 4 is a schematic structural diagram of a positive electrode plate when viewed from its thickness direction according to an embodiment of this application;
FIG. 5 is a sectional view of a negative electrode plate along A-A in its thickness direction according to an embodiment of this application, where the position of the A-A section is shown in FIG. 3;
FIG. 6 is a schematic structural diagram of a positive electrode plate when viewed from its thickness direction according to another embodiment of this application;
FIG. 7 is a sectional view of a negative electrode plate along A-A in its thickness direction according to another embodiment of this application, where the position of the A-A section is shown in FIG. 3;
FIG. 8 is a scanning electron microscope (SEM) image of a prelithiation region of a negative electrode plate prepared in Example 1-1 of this application;
FIG. 9 is an SEM image of an non-prelithiation region in an edge region of a negative electrode plate prepared in Example 1-1 of this application along a length direction (direction x); and
FIG. 10 is an SEM image of a lithium-containing compound layer on a surface of a negative electrode plate prepared in Example 1-1 of this application.

### DETAILED DESCRIPTION

To make the objectives, technical solutions, and advantages of this application more comprehensible, the following describes this application in detail with reference to accompanying drawings and embodiments. Apparently, the described embodiments are merely some but not all of the embodiments of this application. All other technical solutions obtained by persons of ordinary skill in the art based on the embodiments of this application fall within the protection scope of this application.

It should be noted that, in the specific embodiments of this application, a lithium-ion battery is used as an example of an electrochemical apparatus to explain this application. However, the electrochemical apparatus in this application is not limited to the lithium-ion battery.

In order to reduce the risk of lithium precipitation during use, electrochemical apparatus design generally requires the area of the negative electrode plate to be greater than the area of the positive electrode plate. The portion of the negative electrode plate that exceeds the positive electrode plate is referred to as an edge overhang portion of the negative electrode plate. However, in the formation and aging stages of the electrochemical apparatus, the edge overhang portion of the negative electrode plate cannot be pressed; otherwise, the adhesion between the separator in this region and the negative electrode plate becomes weaker and the interface gap between the separator and the negative electrode plate becomes larger. During the cycling process of the electrochemical apparatus, as the electrolyte is consumed, a lack of electrolyte is likely to occur at the edge of the negative electrode plate, leading to lithium precipitation at the edge of the negative electrode plate.

In addition, the electrochemical apparatus swells during the cycling process, causing the electrode plate to extend in the width direction and length direction, and the electrode assembly to continuously squeeze the housing, leading to deformation of the electrochemical apparatus. Therefore, a certain gap needs to be reserved between the electrode assembly and the housing. However, after electrolyte injection, there is a relatively larger amount of electrolyte at the edge of the electrode assembly, leading to an increased amount of film-forming additives in the electrolyte at the edge. This in turn results in higher film-forming impedance at the edge of the electrode plate during the formation and aging stages. Therefore, lithium precipitation easily occurs at the edge of the negative electrode plate during the cycling process.

To increase the capacity of the electrochemical apparatus, typically lithium is supplemented to the negative electrode plates to improve the initial coulombic efficiency of the negative electrode plates.

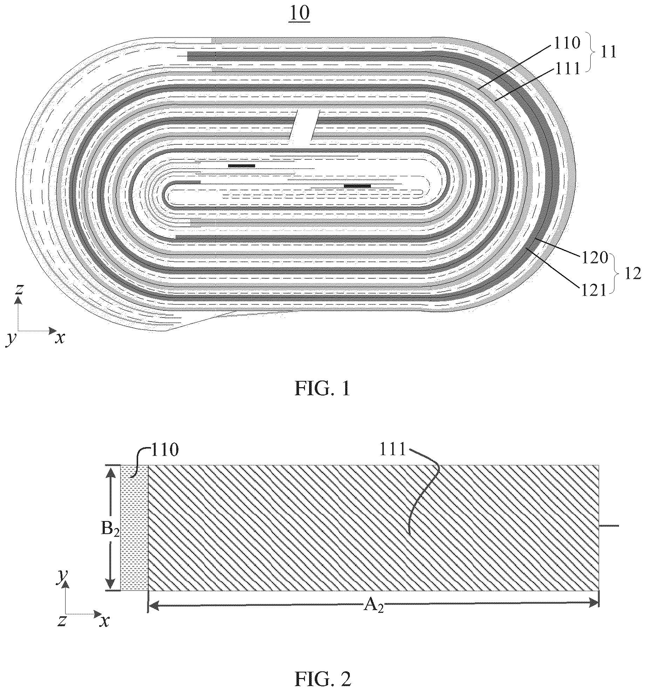

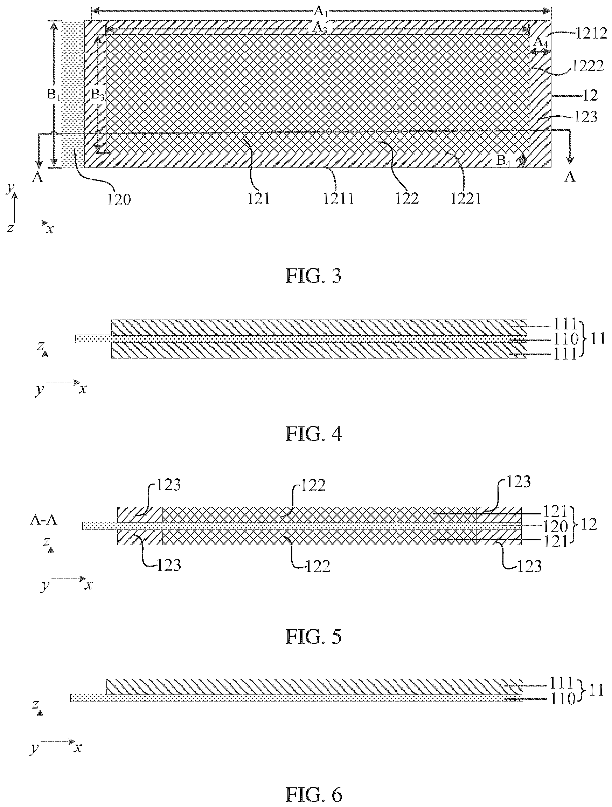

In view of this, a first aspect of this application provides an electrochemical apparatus. As shown in FIG. 1, FIG. 2 and FIG. 3, the electrochemical apparatus includes an electrode assembly 10, and the electrode assembly 10 includes a positive electrode plate 11 and a negative electrode plate 12. FIG. 4 is a schematic structural diagram of the positive electrode plate 11 viewed along its thickness direction, and FIG. 5 is a cross-sectional view of the negative electrode plate 12 in its thickness direction along the A-A section shown in FIG. 3. The positive electrode plate 11 includes a positive electrode current collector 110 and a first positive electrode active material layer 111 disposed on a surface of the positive electrode current collector 110. The negative electrode plate 12 includes a negative electrode current collector 120 and a first negative electrode active material layer 121 disposed on a surface of the negative electrode current collector 120. The first negative electrode active material layer 121 includes a prelithiation region 122 and an non-prelithiation region 123, the non-prelithiation region 123 being a region located within a region of the first negative electrode active material layer 121 and having no area overlapping with the prelithiation region 122. As shown in FIG. 3, the first negative electrode active material layer 121 has a dimension of B₁ mm in a width direction (direction y), and the first positive electrode active material layer 111 has a dimension of B₂ mm in the width direction (direction y); and distance between an edge 1211 of the first negative electrode active material layer 121 extending along a length direction (direction x) and an adjacent edge 1221 of the prelithiation region extending along the length direction (direction x) is B₄ mm, where 0.15 ≤ B₄ ≤ 1/2 × (B₁ - B₂) + 1.

This application controls the amount of lithium supplemented in different regions on the surface of the negative electrode plate 12, so as to supplementing lithium evenly in the normal regions while supplementing no lithium at the edge of the negative electrode plate 12. Because no lithium is supplemented at the edge of the negative electrode plate 12, this location has a relatively larger local capacity, allowing accommodation of more lithium ions from the positive electrode plate 11. During the formation and aging stages of the electrochemical apparatus, the edge of the negative electrode plate 12 receives the lithium ions from the corresponding positive electrode plate 11 that will participate in formation of solid electrolyte interface films and silicates. However, these lithium ions become inactive lithium and cannot return to the positive electrode plate 11, leading to a reduction in the reversible lithium ions at the edge of the positive electrode plate 11. Thus, even if the electrolyte at the edge of the negative electrode plate 12 undergoes broken bridge or the film-forming impedance at the edge of the negative electrode plate 12 is high, due to the relatively large capacity at that position and the less active lithium at the edge of the corresponding positive electrode plate 11, the edge of the negative electrode plate 12 can accept lithium ions from the edge of the opposite positive electrode plate 11. This can reduce the risk of lithium precipitation at the edge of the negative electrode plate 12 during the cycling process of the electrochemical apparatus.

In an embodiment of this application, as shown in FIG. 3, the first negative electrode active material layer 121 has a dimension of A₁ mm in the length direction (direction x), and the first positive electrode active material layer 111 has a dimension of A₂ mm in the length direction (direction x); and distance between an edge 1212 of the first negative electrode active material layer 121 extending along the width direction (direction y) and an adjacent edge 1222 of the prelithiation region extending along the width direction (direction y) is A₄ mm, where 0.15 ≤ A₄ ≤ 1/2 × (A₁ - A₂) + 1. Controlling A₄ within the above range can reduce the risk of lithium precipitation at the edge of the negative electrode plate 12 in the length direction, thereby improving the safety and reliability of the electrochemical apparatus.

In an embodiment of this application, the prelithiation region 122 has a dimension of B₃ mm in the width direction (direction y), where B₁, B₃, and B₄ satisfy B₄ = (B₁ - B₃)/2. With the above technical solution, the risk of the positive electrode plate 11 exceeding the negative electrode plate 12 in the width direction can be reduced, and the risk of lithium precipitation on the negative electrode plate 12 can be reduced, thereby improving the safety and reliability of the electrochemical apparatus.

In an embodiment of this application, the prelithiation region 122 has a dimension of A₃ mm in the length direction (direction x), where A₁, A₃, and A₄ satisfy A₄ = (A₁ - A₃)/2. With the above technical solution, the risk of the positive electrode plate 11 exceeding the negative electrode plate 12 in the length direction can be reduced, and the risk of lithium precipitation on the negative electrode plate 12 can be reduced, thereby improving the safety and reliability of the electrochemical apparatus.

In an embodiment of this application, the electrode assembly 10 is a wound structure, where 0.15 ≤ A₄ ≤ 5, and 0.15 ≤ B₄ ≤ 1.75. Controlling the dimension of the non-prelithiation region 123 to satisfy the above relationships can reduce the risk of lithium precipitation on the negative electrode plate 12, improve the safety and reliability of the electrochemical apparatus, and reduce the influence of the otherwise too-large non-prelithiation region 123 on the capacity of the electrochemical apparatus.

In an embodiment of this application, the electrode assembly 10 is a stacked structure, where 0.15 ≤ A₄ ≤ 1.75, and 0.15 ≤ B₄ ≤ 1.6. Controlling the dimension of the non-prelithiation region 123 to satisfy the above relationships can further reduce the influence of the otherwise too-large non-prelithiation region 123 on the capacity of the electrochemical apparatus.

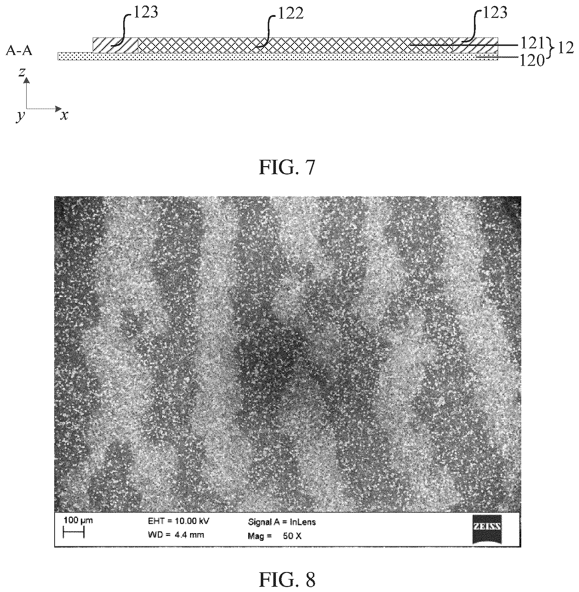

In an embodiment of this application, FIG. 6 is a schematic structural diagram of the positive electrode plate 11 when viewed from its thickness direction, and FIG. 7 is a cross-sectional view of the negative electrode plate along A-A (as shown in FIG. 3) in its thickness direction. The positive electrode plate 11 includes a positive electrode current collector 110 and a first positive electrode active material layer 111 disposed on a surface of the positive electrode current collector 110. The negative electrode plate 12 includes a negative electrode current collector 120 and a first negative electrode active material layer 121 disposed on a surface of the negative electrode current collector 120. Such configuration can also achieve the objectives of this application.

In an embodiment of this application, when viewed from a thickness direction (direction z) of the negative electrode plate 12, the prelithiation region 122 has striped portions; along an arrangement direction of multiple striped portions, the striped portion has a dimension of 0.1 mm to 2 mm; and/or in the thickness direction of the negative electrode plate 12, the striped portion has a thickness of 0.04 µm to 0.5 µm. The negative electrode plate having the above features can improve the initial coulombic efficiency of the negative electrode plate 12, helping to improve the energy density of the electrochemical apparatus. Specifically, in an embodiment, in the first direction, the striped portion has a width of 0.1 mm to 2 mm, and in the thickness direction, the striped portion has a thickness of 0.04 µm to 0.5 µm; in an embodiment, in the first direction, the striped portion has a width of 0.1 mm to 2 mm; and in an embodiment, in the thickness direction, the striped portion has a thickness of 0.04 µm to 0.5 µm.

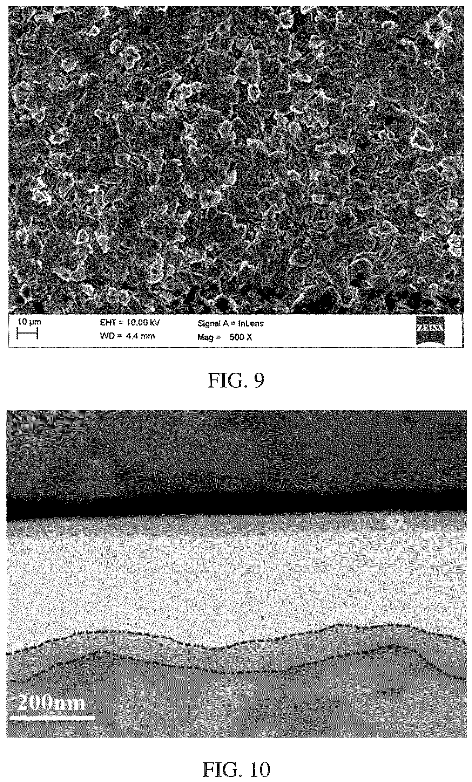

It can be understood that the striped portion refers to a lithium strip with striped gaps formed during calendering of lithium metal when lithium is supplemented through lithium metal foil. When the lithium foil combines with the negative electrode plate 12, the lithium strip with striped gaps formed can be maintained, so the striped portion can be observed from the thickness direction (direction z) of the negative electrode plate 12. After the prelithiation negative electrode plate 12 and the positive electrode plate 11 are assembled into the electrochemical apparatus, as lithium metal is absorbed into the negative electrode plate 12, followed by the subsequent formation and aging, the striped portions remain on the surface of the negative electrode plate 12. After the cycling process of the electrochemical apparatus, the prelithiation region 122 on the negative electrode plate 12 has striped portions, as shown in FIG. 8, while the non-prelithiation region 123 at the edge of the negative electrode plate 12 does not have striped portions, as shown in FIG. 9.

In an embodiment of this application, a material of the prelithiation region 122 includes at least one of lithium carbonate, lithium oxide, lithium nitride, or lithium fluoride. During the lithium supplement process of the negative electrode plate 12, due to the high activity of lithium metal, it reacts with air (such as oxygen and trace amounts of moisture), and reacts with the fluorine-containing substances in the electrolyte in the formation process of the electrochemical apparatus. As a result, a layer of lithium-containing compound is formed on the surface of the first negative electrode active material layer 121. The main components of the lithium-containing compound include at least one of lithium carbonate, lithium oxide, lithium nitride, or lithium fluoride. After the assembled electrode assembly 10 is injected with electrolyte, lithium metal rapidly reacts with the negative electrode active material, but the lithium-containing compound layer does not react with the negative electrode active material. After the active lithium metal reacts with the negative electrode active material, the lithium-containing compound layer is retained on the surface of the negative electrode plate 12. The prelithiation region 122 forms one lithium-containing compound layer on the surface of the negative electrode active material, as shown in the layered structure between two black dashed lines in FIG. 10. The lithium-containing compound layer has a thickness of 0.04 µm to 0.5 µm. The negative electrode plate 12 having the above features can improve the initial coulombic efficiency of the negative electrode plate 12, helping to improve the energy density of the electrochemical apparatus. Additionally, the surface resistance of the negative electrode plate 12 can be increased, reducing the risk of short circuits and the short-circuit current. Furthermore, the material covering the prelithiation region 122 on the surface of the negative electrode active material can reduce the risk of damage to the solid electrolyte interface film.

In an embodiment of this application, the first negative electrode active material layer 121 includes a negative electrode active material, and the negative electrode active material includes a silicon-based material. The silicon-based material includes at least one of silicon, silicon-oxygen compound (SiOₓ, 0<x≤2), silicon alloy, or silicon-carbon compound. The negative electrode active material in this application may further include at least one of graphite, mesocarbon microbeads (MCMB), hard carbon, soft carbon, Li-Sn alloy, Li-Sn-O alloy, Sn, SnO, SnO₂, spinel-structure lithium titanate Li₄Ti₅O₁₂, Li-Al alloy, lithium metal, or the like. The selection of the materials described above helps to increase the energy density of the electrochemical apparatus.

It can be understood that for an electrode assembly with a wound structure, its electrode plate usually has long and short edges when unwound. In an embodiment of this application, the electrode assembly is a wound structure, the width direction is an extension direction of a short side of an unwound electrode plate, and the length direction is an extension direction of a long side of the unwound electrode plate. The electrode plate of this application includes the positive electrode plate 11 and the negative electrode plate 12.

It can be understood that for an electrode assembly with a stacked structure, the electrode plates are usually stacked layer by layer. In an embodiment of this application, the electrode assembly is a stacked structure, the width direction is an extension direction of a short side of an electrode plate, and the length direction is an extension direction of a long side of the electrode plate. The foregoing electrode plate includes the positive electrode plate 11 and the negative electrode plate 12.

In an embodiment of this application, for an electrode assembly with a stacked structure, when all sides of the electrode plate have the same dimension, the width direction is an extension direction of one side of the electrode plate, and the length direction is a direction perpendicular to the width direction on a plane where the electrode plate is located.

The electrochemical apparatus of this application is not particularly limited and may include any apparatus in which an electrochemical reaction takes place. In an embodiment of this application, the electrochemical apparatus may include but is not limited to a lithium-ion secondary battery (lithium-ion battery), a lithium polymer secondary battery, or a lithium-ion polymer secondary battery. In an embodiment of this application, the electrode assembly structure of the lithium-ion battery of this application includes a wound structure, a stacked structure, or the like. The lithium-ion battery structure of this application includes but is not limited to a pouch lithium-ion battery, prismatic hard-shell battery, or a cylindrical hard-shell battery, or the like.

The negative electrode current collector 120 is not particularly limited in this application, provided that the objectives of this application can be achieved. For example, the negative electrode current collector 120 may include copper foil, copper alloy foil, nickel foil, stainless steel foil, titanium foil, foamed nickel, foamed copper, a composite current collector, or the like. The thickness of the negative electrode current collector 120 is not particularly limited in this application, provided that the objectives of this application can be achieved. For example, the thickness of the negative electrode current collector 120 is 4 µm to 10 µm. In this application, the first negative electrode active material layer 121 may be provided on one or two surfaces of the negative electrode current collector 120 in a thickness direction of the negative electrode current collector 120. It should be noted that the "surface" herein may be an entire region of the negative electrode current collector 120, or may be a partial region of the negative electrode current collector 120. This is not particularly limited in this application, provided that the objectives of this application can be achieved.

In this application, a first negative electrode active material layer 121 is provided on a surface of the negative electrode current collector 120, or a functional layer is also included between the negative electrode current collector 120 and the first negative electrode active material layer 121. For example, the functional layer includes but is not limited to a conductive bonding layer. The conductive bonding layer may include a conductive agent and a binder.

The thickness of the first negative electrode active material layer 121 is not particularly limited in this application, provided that the objectives of this application can be achieved. For example, a thickness of the first negative electrode active material layer on one surface is 30 µm to 160 µm.

The conductive agent is not particularly limited in this application, provided that the objectives of this application can be achieved. For example, the conductive agent may include but is not limited to at least one of a carbon-based material, a metal-based material, or a conductive polymer. The carbon-based material is selected from at least one of natural graphite, artificial graphite, conductive carbon black, acetylene black, Ketjen black, or carbon fiber. The metal-based material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole.

The binder is not particularly limited in this application, provided that the objectives of this application can be achieved. For example, the binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide containing polymer, polyvinylpyrrolidone, polyurethane, polytetrafluoroethylene, polyvinylidene fluoride, polyethylene, polypropylene, polyacrylic acid, styrene-butadiene rubber, acrylic styrene-butadiene rubber, epoxy resin, or nylon.

The positive electrode current collector 110 is not particularly limited in this application, provided that the objectives of this application can be achieved. For example, the positive electrode current collector 110 may include aluminum foil, aluminum alloy foil, a composite current collector, or the like. The thickness of the positive electrode current collector 110 is not particularly limited in this application, provided that the objectives of this application can be achieved. For example, the thickness of the positive electrode current collector 110 is 5 µm to 20 µm, and preferably 6 µm to 18 µm.

The first positive electrode active material layer 111 of this application may include a positive electrode active material. A type of the positive electrode active material is not particularly limited in this application, provided that the objectives of this application can be achieved. For example, the positive electrode active material may include at least one of nickel cobalt lithium manganate, lithium nickel cobalt aluminate, lithium iron phosphate, lithium-rich manganese-based materials, lithium cobalt oxide, lithium manganate, or lithium iron manganese phosphate. In this application, the positive electrode active material may further include a non-metal element. For example, the non-metal element includes at least one of fluorine, phosphorus, boron, chlorine, silicon, or sulfur. These elements can further improve stability of the positive electrode active material.

The thickness of the first positive electrode active material layer 111 is not particularly limited in this application, provided that the objectives of this application can be achieved. For example, a thickness of the first positive electrode active material layer 111 on one surface is 30 µm to 120 µm.

In this application, the first positive electrode active material layer 111 may be provided on one or two surfaces of the positive electrode current collector 110 in a thickness direction of the positive electrode current collector 110. It should be noted that the "surface" herein may be an entire region of the positive electrode current collector 110, or may be a partial region of the positive electrode current collector 110. This is not particularly limited in this application, provided that the objectives of this application can be achieved.

The separator and the electrolyte are not particularly limited in this application and may be selected by persons skilled in the art based on an actual situation, provided that the objectives of this application can be achieved.

A second aspect of this application provides a method for manufacturing the electrochemical apparatus according to the first aspect of this application. The method includes the following steps:
providing the first negative electrode active material layer 121 on the surface of the negative electrode current collector 120, and providing the prelithiation region 122 and the non-prelithiation region 123 on the first negative electrode active material layer 121 to obtain the negative electrode plate 12;
providing the first positive electrode active material layer 111 on the surface of the positive electrode current collector 110 to obtain the positive electrode plate 11; and
assembling the negative electrode plate 12 and the positive electrode plate 11 to obtain the electrode assembly 10, and packaging the electrode assembly 10 to obtain the electrochemical apparatus, where the first negative electrode active material layer 121 faces the first positive electrode active material layer 111.

This application has no particular limitation on the method for providing the first negative electrode active material layer 121 on the surface of the negative electrode current collector 120. For example, a negative electrode slurry is applied on the surface of the negative electrode current collector 120 to form the first negative electrode active material layer 121. This application has no particular limitation on the method for providing the first positive electrode active material layer 111 on the surface of the positive electrode current collector 110. For example, a positive electrode slurry is applied on the surface of the positive electrode current collector 110 to form the first positive electrode active material layer 111.

This application has no particular limitation on the method for adjusting the dimensions of the prelithiation region 122 and the non-prelithiation region 123, and the method in the art may be used. For example, an adhesive paper can be attached on the region on the surface of the negative electrode plate 12 that does not require lithium supplement, where the size of the adhesive paper can be adjusted according to the dimension of the designed non-prelithiation region 123. Then the lithium foil is laminated to the surface of the negative electrode plate 12, followed by rolling. After the lithium supplement is completed, the adhesive paper is removed so as to obtain the partially regionally lithium-supplemented negative electrode plate 12 with partial region prelithiation.

The electrochemical apparatus manufactured using the method provided in the second aspect of this application can reduce the risk of lithium precipitation on the negative electrode plate 12 and improve the safety and reliability of the electrochemical apparatus.

In an embodiment of this application, the process of assembling the electrode assembly 10 includes: stacking the negative electrode plate 12 and the positive electrode plate 11 to obtain the electrode assembly 10, or stacking the negative electrode plate 12 and the positive electrode plate 11 and winding the resulting stack to obtain the electrode assembly 10.

In this application, the electrode assembly 10 is packaged to obtain an electrochemical apparatus. This application has no particular limitation on the packaging process, provided that the objectives of this application can be achieved.

In an embodiment of this application, at least one of lithium foil or lithium powder is used on the surface of the first negative electrode active material layer 121 to provide the prelithiation region 122 on the first negative electrode active material layer 121. With the prelithiation region 122 provided in the above manner, the initial coulombic efficiency of the negative electrode plate 12 can be improved, helping to improve the energy density of the electrochemical apparatus.

The lithium supplement method is not particularly limited in this application and may be selected by persons skilled in the art based on an actual situation, provided that the objectives of this application can be achieved. For example, in a drying chamber (environmental humidity < 1.7%), the lithium foil is rolled to a thickness in the micrometer range, and then laminated to the surface of the negative electrode plate 12, followed by rolling.

A third aspect of this application provides an electronic apparatus including the electrochemical apparatus according to the first aspect of this application. The electrochemical apparatus provided in this application has good safety and reliability, so the electronic apparatus provided in this application also has good safety and reliability.

The electronic apparatus is not particularly limited in this application and may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc player, a transceiver, an electronic notebook, a calculator, a storage card, a portable recorder, a radio, a backup power source, a motor, an automobile, a motorcycle, a motor bicycle, a bicycle, a lighting appliance, a toy, a game machine, a clock, an electric tool, a flash lamp, a camera, a large household battery, a lithium-ion capacitor, or the like.

The following describes the embodiments of this application more specifically by using examples and comparative examples. Various tests and evaluations are performed in the following methods. In addition, unless otherwise specified, "part" and "%" are based on weight.

### Test methods and devices:

### Negative electrode plate morphology test:

The cycled negative electrode plate is disassembled in a drying chamber (humidity < 1.7%), washed three times with dimethyl carbonate (DMC), and then air-dried. The morphology of the negative electrode plate is observed using the scanning electron microscopy (SEM), and SEM images are taken to measure the width of the striped portion.

### Cross-section morphology test of negative electrode plate:

The disassembled negative electrode plate is polished and sampled under the action of argon ions, and its cross-section morphology is photographed using SEM. The thickness of the striped portion and the thickness of the lithium-containing compound layer on the surface of the negative electrode plate are measured.

### Cycling test:

### Ambient temperature: 25±5°C

Cycling test procedure: The lithium-ion battery is fully charged at the maximum rated current, left standing for 5 min, and then discharged to 3.0 V at a constant current of 0.5C (C-rate). This charge and discharge cycle is repeated for 500 times. After that, the lithium-ion battery is fully charged at the maximum rated current. At the 500th cycle, the lithium-ion battery is disassembled to observe lithium precipitation at the edge of the negative electrode plate.

### Lithium precipitation degree determination:

The cycled negative electrode plate is disassembled in a drying chamber (humidity < 1.7%), and photographs are taken to record the lithium precipitation at the edge of the negative electrode plate. No lithium precipitation discovered or lithium precipitation area < 2% is considered as no lithium precipitation; the lithium precipitation area between 2% and 20% is considered as slight lithium precipitation; and the lithium precipitation area > 20% is considered as severe lithium precipitation, where the percentage of the lithium precipitation area is calculated based on the single-side area of the negative electrode plate.

### Capacity test:

In an environment of 25°C, the lithium-ion battery is charged at a constant current of 0.5C (C-rate) until an upper-limit voltage of 4.2 V is reached, and discharged at a constant current of 0.2C until a final voltage of 2.8 V is reached. The first-cycle discharge capacity at 0.2C is recorded as the capacity of the lithium-ion battery.

### Example 1-1

### <Preparation of negative electrode plate>

A negative electrode active material graphite, silicon oxide (SiOₓ, x=1), carboxymethyl cellulose, and styrene butadiene rubber were mixed at a mass ratio of 96.7:10:1.3:1.0, added with deionized water as a solvent, and stirred to uniformity to obtain a negative electrode slurry with a solid content of 70wt%. The negative electrode slurry was uniformly applied onto one surface of the negative electrode current collector copper foil with a thickness of 10 µm, followed by drying at 110°C, to obtain a negative electrode plate with one surface coated with a 150 µm-thick first negative electrode active material layer. Then the foregoing steps were repeated on another surface of the negative electrode plate to obtain the negative electrode plate coated with the first negative electrode active material layer on both surfaces. After coating, the negative electrode plate was cold-pressed and cut for future use. The first negative electrode active material layer had a dimension A₁ of 1258 mm in direction x and a dimension B₁ of 73.8 mm in direction y.

An adhesive paper was attached to the region on the surface of the negative electrode plate that does not require lithium supplement. The size of the adhesive paper could be adjusted according to the dimension of the designed non-prelithiation region, that is, B₄ could be adjusted by adjusting the size of the adhesive paper. Then, the lithium foil was rolled to a thickness of several micrometers (2 µm) in a drying chamber (ambient humidity < 1%), and then laminated to the surface of the negative electrode plate prepared above, followed by rolling. The adhesive paper was removed from the surface of the negative electrode plate, resulting in a negative electrode plate with lithium supplemented in all regions except the edge region. The prelithiation region had a dimension of A₃ being 1258 mm and B₃ being 73.6 mm, while the non-prelithiation region at the edge of the negative electrode plate had a dimension of A₄ being 0 mm and B₄ being 0.15 mm. The compacted density of the negative electrode plate was 1.76 g/cm³.

### <Preparation of positive electrode plate>

A positive electrode active material lithium cobalt oxide (LiCoO₂), a conductive agent conductive carbon black, and polyvinylidene fluoride (PVDF) were mixed at a mass ratio of 97:1.4:1.6, added with N-methylpyrrolidone (NMP) as a solvent, and stirred to uniformity to obtain a positive electrode slurry with a solid content of 75wt%. The positive electrode slurry was uniformly applied onto one surface of a positive electrode current collector aluminum foil with a thickness of 10 µm, followed by drying at 110°C, to obtain a positive electrode plate with one surface coated with a 110 µm-thick first positive electrode active material layer. Then, the first positive electrode active material layer was applied on another surface of the positive electrode plate with the same steps to obtain the positive electrode plate coated with the positive electrode active material on both surfaces. After coating, the positive electrode plate was cold-pressed and cut for future use. The first positive electrode active material layer had a dimension A₂ of 1250 mm in direction x and a dimension B₂ of 72.3 mm in direction y. The compacted density of the positive electrode plate was 4.15 g/cm³.

### <Preparation of electrolyte>

In a dry argon atmosphere glove box, the organic solvent ethylene carbonate (EC), propylene carbonate (PC), diethyl carbonate (DEC), and ethyl propionate (EP) were mixed in a mass ratio of EC:PC:DEC:EP = 3:1:3:3, and then lithium hexafluorophosphate (LiPF₆) was added to the organic solvent for dissolving and mixing to uniformity, to obtain an electrolyte with a lithium salt concentration of 1 mol/L.

### <Preparation of separator>

PVDF and alumina ceramic were mixed in a mass ratio of 9:1, added with deionized water as a solvent, and stirred to uniformity to obtain a slurry with a solid content of 12wt%. The slurry was uniformly applied onto one surface of a polyethylene film substrate with a thickness of 15 µm, followed by drying, to obtain the separator.

### <Preparation of lithium-ion battery>

The prepared positive electrode plate, separator, and negative electrode plate were stacked in sequence, so that the separator was sandwiched between the positive electrode plate and the negative electrode plate for separation. Then the resulting stack was wound to obtain an electrode assembly. The electrode assembly was placed into an aluminum-plastic film packaging case and then dried in a vacuum oven at 85°C for 12 hours to remove moisture. After that, the prepared electrolyte was injected, and processes such as vacuum sealing, standing, formation (charged to 3.5 V at a constant current of 0.02C, and then charged to 3.9 V at a constant current of 0.1C), shaping, and aging were performed to obtain the lithium-ion battery. The designed battery capacity was 4614 mAh.

### Examples 1-2 to 1-12

These examples were the same as Example 1-1 except that the related dimension parameters of the lithium-ion batteries were adjusted according to Table 1.

### Examples 2-1 to 2-12

These examples were the same as Example 1-1 except that the related dimension parameters of the lithium-ion batteries were adjusted according to Table 2.

### Example 3-1

In <Preparation of negative electrode plate>, the first negative electrode active material layer had a dimension A₁ of 94.1 mm in direction x and a dimension B₁ of 42.5 mm in direction y; the prelithiation region had a dimension of A₃ being 94.1 mm and B₃ being 42.1 mm, and the non-prelithiation region at the edge of the negative electrode plate had a dimension B₄ of 0.2 mm. In <Preparation of positive electrode plate>, the first positive electrode active material layer had a dimension A₂ of 92.6 mm in direction x and a dimension B₂ of 41.3 mm in direction y. <Preparation of lithium-ion battery> was different from that in Example 1. All other steps were the same as in Example 1-1.

### <Preparation of lithium-ion battery>

The positive electrode plate, the separator, and the negative electrode plate were stacked in sequence, so that the separator was sandwiched between the positive electrode plate and the negative electrode plate for separation. The entire stacked structure was secured at its four corners using adhesive tape. Then the stack was placed into an aluminum-plastic film, followed by top-side sealing, electrolyte injection, and packaging, to obtain the lithium-ion battery.

The dimension parameters of the prepared lithium-ion battery were shown in Table 3, and the designed battery capacity was 2926 mAh.

### Examples 3-2 to 3-11

These examples were the same as Example 3-1 except that the related dimension parameters of the lithium-ion batteries were adjusted according to Table 3.

### Examples 4-1 to 4-11

These examples were the same as Example 3-1 except that the related dimension parameters of the lithium-ion batteries were adjusted according to Table 4.

### Comparative Examples 1 to 3

These comparative examples were the same as Example 1-1 except that the related dimension parameters of the lithium-ion batteries were adjusted according to Table 1.

### Comparative Example 4

This comparative example was the same as Example 1-1 except that the related dimension parameters of the lithium-ion battery were adjusted according to Table 2.

### Comparative Examples 5 to 7

These comparative examples were the same as Example 3-1 except that the related dimension parameters of the lithium-ion batteries were adjusted according to Table 3.

### Comparative Examples 8 and 9

These comparative examples were the same as Example 3-1 except that the related dimension parameters of the lithium-ion batteries were adjusted according to Table 4.

Table 1 shows related parameters and performance test results of Examples 1-1 to 1-12 and Comparative Examples 1 to 3.

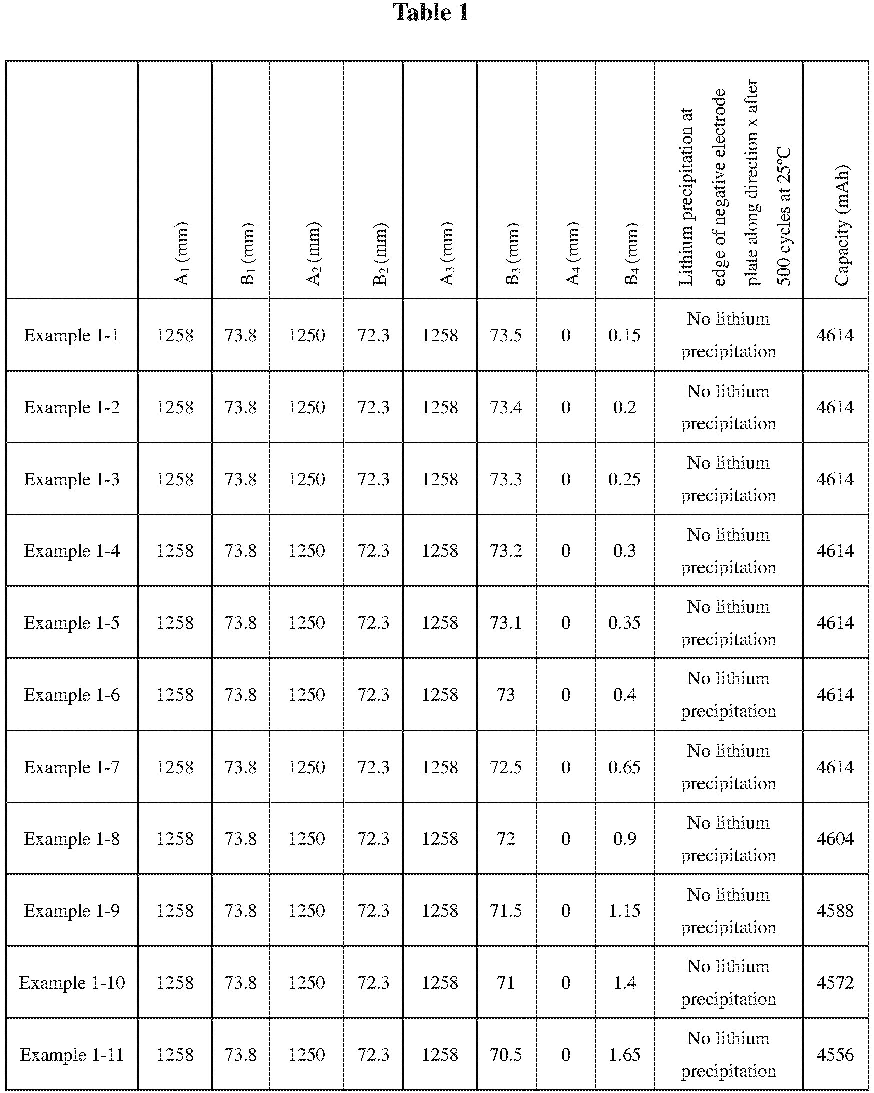

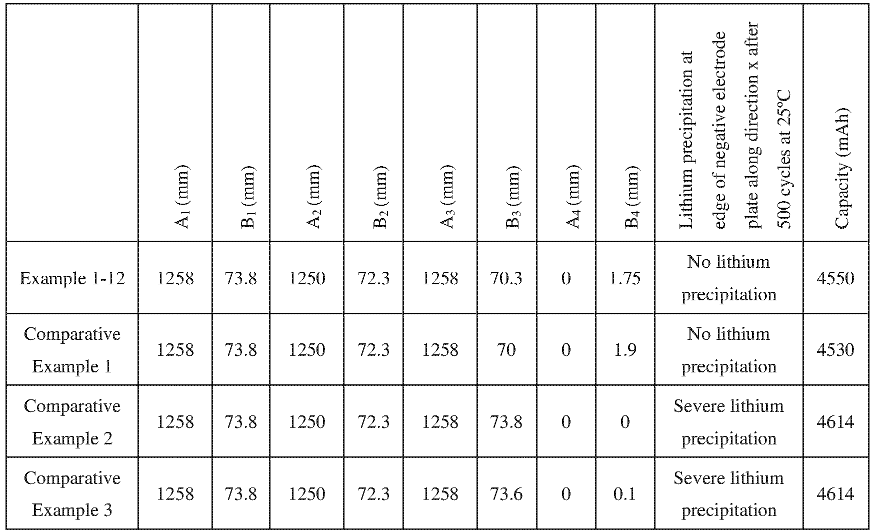

From Example 1-1 to Example 1-12 and Comparative Examples 2 and 3, it can be learned that when B₄ is controlled within the range of this application, as the dimension of the non-prelithiation region disposed in the edge region of the negative electrode plate along direction x increases, the local capacity ratio in the edge region of the negative electrode plate along direction x increases. This allows for effective accommodation of lithium ions from the edge of the opposite positive electrode plate, thus alleviating the lithium precipitation in the edge region of the negative electrode plate along direction x, reducing the risk of lithium precipitation on the negative electrode plate, and improving the safety and reliability of the lithium-ion battery.

From Example 1-1 to Example 1-12 and Comparative Example 1, it can be learned that as the area of the non-prelithiation region increases, the local specific capacity in that region increases. Due to the low initial coulombic efficiency of the negative electrode active material silicon, the first-cycle charge and discharge process consumes active lithium ions from the positive electrode, reducing the lithium ions usable by the positive electrode plate. As a result, the capacity of the lithium-ion battery tends to decrease. However, when the area of the non-prelithiation region is too large (for example, in Comparative Example 1), although no lithium precipitation occurs in the edge region of the negative electrode plate along direction x, the decrease in the capacity of the lithium-ion battery is significant, which is unfavorable for improving the capacity performance of the lithium-ion battery. Therefore, it is evident that controlling B₄ within the range of this application can obtain a lithium-ion battery with excellent capacity performance.

Table 2 shows related parameters and performance test results of Examples 2-1 to 2-12 and Comparative Examples 2 and 4.

**Table 2**

| | A₁ (mm) | B₁ (mm) | A₂ (mm) | B₂ (mm) | A₃ (mm) | B₃ (mm) | A₄ (mm) | B₄ (mm) | Lithium precipitation at edge of negative electrode plate along direction y after 500 cycles at 25°C | Lithium precipitation at edge of negative electrode plate along direction x after 500 cycles at 25°C | Capacity (mAh) |
|---|---|---|---|---|---|---|---|---|---|---|---|
| Example 2-1 | 1258 | 73.8 | 1250 | 72.3 | 1257 | 73.4 | 0.5 | 0.2 | No lithium precipitation | No lithium precipitation | 4614 |
| Example 2-2 | 1258 | 73.8 | 1250 | 72.3 | 1256 | 73.2 | 1 | 0.3 | No lithium precipitation | No lithium precipitation | 4614 |
| Example 2-3 | 1258 | 73.8 | 1250 | 72.3 | 1255 | 73 | 1.5 | 0.4 | No lithium precipitation | No lithium precipitation | 4614 |
| Example 2-4 | 1258 | 73.8 | 1250 | 72.3 | 1254 | 72.8 | 2 | 0.5 | No lithium precipitation | No lithium precipitation | 4614 |
| Example 2-5 | 1258 | 73.8 | 1250 | 72.3 | 1253 | 72.6 | 2.5 | 0.6 | No lithium precipitation | No lithium precipitation | 4614 |
| Example 2-6 | 1258 | 73.8 | 1250 | 72.3 | 1252 | 72.4 | 3 | 0.7 | No lithium precipitation | No lithium precipitation | 4614 |
| Example 2-7 | 1258 | 73.8 | 1250 | 72.3 | 1251 | 72.2 | 3.5 | 0.8 | No lithium precipitation | No lithium precipitation | 4611 |
| Example 2-8 | 1258 | 73.8 | 1250 | 72.3 | 1250 | 72 | 4 | 0.9 | No lithium precipitation | No lithium precipitation | 4604 |
| Example 2-9 | 1258 | 73.8 | 1250 | 72.3 | 1249 | 71.5 | 4.5 | 1.15 | No lithium precipitation | No lithium precipitation | 4585 |
| Example 2-10 | 1258 | 73.8 | 1250 | 72.3 | 1248 | 71 | 5 | 1.4 | No lithium precipitation | No lithium precipitation | 4565 |
| Example 2-11 | 1258 | 73.8 | 1250 | 72.3 | 1248 | 70.5 | 5 | 1.65 | No lithium precipitation | No lithium precipitation | 4545 |
| Example 2-12 | 1258 | 73.8 | 1250 | 72.3 | 1248 | 70.3 | 5 | 1.75 | No lithium precipitation | No lithium precipitation | 4525 |
| Comparative Example 2 | 1258 | 73.8 | 1250 | 72.3 | 1258 | 73.8 | 0 | 0 | Severe lithium precipitation | Severe lithium precipitation | 4614 |
| Comparative Example 4 | 1258 | 73.8 | 1250 | 72.3 | 1246 | 70 | 6 | 1.9 | No lithium precipitation | No lithium precipitation | 4505 |

From Example 2-1 to Example 2-12 and Comparative Example 2, it can be learned that when both A₄ and B₄ are controlled within the ranges of this application, as the dimensions of the non-prelithiation region in the edge region of the negative electrode plate along direction x and direction y increase, the local capacity ratios in the edge region of the negative electrode plate along direction x and direction y increases. This allows for effective accommodation of lithium ions from the edge of the opposite positive electrode plate, thus alleviating the lithium precipitation in the edge region of the negative electrode plate along direction x and direction y, reducing the risk of lithium precipitation on the negative electrode plate, and improving the safety and reliability of the lithium-ion battery.

From Example 2-1 to Example 2-12 and Comparative Example 4, it can be learned that as the area of the non-prelithiation region increases, the capacity of the lithium-ion battery tends to decrease. However, when the area of the non-prelithiation region is too large (for example, in Comparative Example 4), although no lithium precipitation occurs in the edge region of the negative electrode plate along direction x and direction y, the decrease in the capacity of the lithium-ion battery is significant, which is unfavorable for improving the capacity performance of the lithium-ion battery. Therefore, it is evident that controlling both A₄ and B₄ within the ranges of this application can obtain a lithium-ion battery with excellent capacity performance.

Table 3 shows related parameters and performance test results of Examples 3-1 to 3-11 and Comparative Examples 5 to 7.

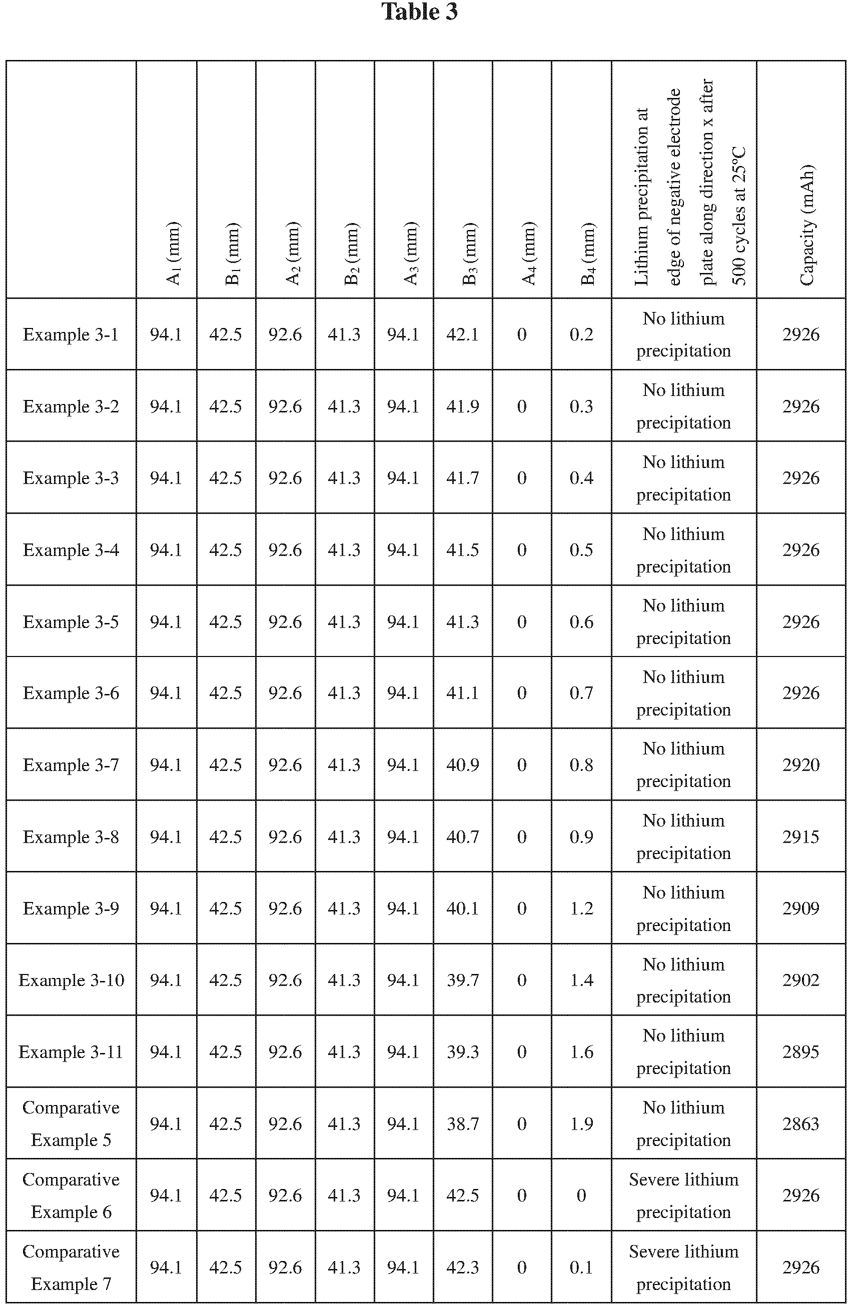

From Example 3-1 to Example 3-11 and Comparative Examples 6 and 7, it can be learned that when B₄ is controlled within the range of this application, as the dimension of the non-prelithiation region disposed in the edge region of the negative electrode plate along direction x increases, the local capacity ratio in the edge region of the negative electrode plate along direction x increases. This allows for effective accommodation of lithium ions from the edge of the opposite positive electrode plate, thus alleviating the lithium precipitation in the edge region of the negative electrode plate along direction x, reducing the risk of lithium precipitation on the negative electrode plate, and improving the safety and reliability of the lithium-ion battery.

From Example 3-1 to Example 3-11 and Comparative Example 5, it can be learned that as the area of the non-prelithiation region increases, the capacity of the lithium-ion battery tends to decrease. However, when the area of the non-prelithiation region is too large (for example, in Comparative Example 5), although no lithium precipitation occurs in the edge region of the negative electrode plate along direction x, the decrease in the capacity of the lithium-ion battery is significant, which is unfavorable for improving the capacity performance of the lithium-ion battery. Therefore, it is evident that controlling B₄ within the range of this application can obtain a lithium-ion battery with excellent capacity performance.

Table 4 shows related parameters and performance test results of Examples 4-1 to 4-11 and Comparative Examples 6, 8 and 9.

**Table 4**

| | A₁ (mm) | B₁ (mm) | A₂ (mm) | B₂ (mm) | A₃ (mm) | B₃ (mm) | A₄ (mm) | B₄ (mm) | Lithium precipitation at edge of negative electrode plate along direction y after 500 cycles at 25°C | Lithium precipitation at edge of negative electrode plate along direction x after 500 cycles at 25°C | Capacity (mAh) |
|---|---|---|---|---|---|---|---|---|---|---|---|
| Example 4-1 | 94.1 | 42.5 | 92.6 | 41.3 | 93.7 | 42.1 | 0.2 | 0.2 | No lithium precipitation | No lithium precipitation | 2926 |
| Example 4-2 | 94.1 | 42.5 | 92.6 | 41.3 | 93.5 | 41.9 | 0.3 | 0.3 | No lithium precipitation | No lithium precipitation | 2926 |
| Example 4-3 | 94.1 | 42.5 | 92.6 | 41.3 | 93.3 | 41.7 | 0.4 | 0.4 | No lithium precipitation | No lithium precipitation | 2926 |
| Example 4-4 | 94.1 | 42.5 | 92.6 | 41.3 | 93.1 | 41.5 | 0.5 | 0.5 | No lithium precipitation | No lithium precipitation | 2926 |
| Example 4-5 | 94.1 | 42.5 | 92.6 | 41.3 | 92.9 | 41.3 | 0.6 | 0.6 | No lithium precipitation | No lithium precipitation | 2926 |
| Example 4-6 | 94.1 | 42.5 | 92.6 | 41.3 | 92.7 | 41.1 | 0.7 | 0.7 | No lithium precipitation | No lithium precipitation | 2910 |
| Example 4-7 | 94.1 | 42.5 | 92.6 | 41.3 | 92.5 | 40.9 | 0.8 | 0.8 | No lithium precipitation | No lithium precipitation | 2893 |
| Example 4-8 | 94.1 | 42.5 | 92.6 | 41.3 | 92.3 | 40.7 | 0.9 | 0.9 | No lithium precipitation | No lithium precipitation | 2870 |
| Example 4-9 | 94.1 | 42.5 | 92.6 | 41.3 | 91.7 | 40.1 | 1.2 | 1.2 | No lithium precipitation | No lithium precipitation | 2810 |
| Example 4-10 | 94.1 | 42.5 | 92.6 | 41.3 | 91.1 | 39.7 | 1.5 | 1.4 | No lithium precipitation | No lithium precipitation | 2780 |
| Example 4-11 | 94.1 | 42.5 | 92.6 | 41.3 | 90.6 | 38.7 | 1.75 | 1.6 | No lithium precipitation | No lithium precipitation | 2730 |
| Comparative Example 6 | 94.1 | 42.5 | 92.6 | 41.3 | 94.1 | 42.5 | 0 | 0 | Severe lithium precipitation | Severe lithium precipitation | 2926 |
| Comparative Example 8 | 94.1 | 42.5 | 92.6 | 41.3 | 90.3 | 38.7 | 1.9 | 1.9 | No lithium precipitation | No lithium precipitation | 2650 |
| Comparative Example 9 | 94.1 | 42.5 | 92.6 | 41.3 | 93.9 | 42.3 | 0.1 | 0.1 | Severe lithium precipitation | Severe lithium precipitation | 2926 |

From Example 4-1 to Example 4-11 and Comparative Examples 6 and 9, it can be learned that when both A₄ and B₄ are controlled within the ranges of this application, as the dimension of the non-prelithiation region disposed in the edge region of the negative electrode plate along direction x increases, the local capacity ratio in the edge region of the negative electrode plate along direction x increases. This allows for effective accommodation of lithium ions from the edge of the opposite positive electrode plate, thus alleviating the lithium precipitation in the edge region of the negative electrode plate along direction x, reducing the risk of lithium precipitation on the negative electrode plate, and improving the safety and reliability of the lithium-ion battery.

From Example 4-1 to Example 4-11 and Comparative Example 8, it can be learned that as the area of the non-prelithiation region increases, the capacity of the lithium-ion battery tends to decrease. However, when the area of the non-prelithiation region is too large (for example, in Comparative Example 8), although no lithium precipitation occurs in the edge region of the negative electrode plate along direction x and direction y, the decrease in the capacity of the lithium-ion battery is significant, which is unfavorable for improving the capacity performance of the lithium-ion battery. Therefore, it is evident that controlling both A₄ and B₄ within the ranges of this application can obtain a lithium-ion battery with excellent capacity performance.

In summary, the technical solutions provided in this application can effectively reduce the risk of lithium precipitation on the negative electrode plate, improve the safety and reliability of the lithium-ion battery, and improve the energy density of the lithium-ion battery while maintaining good cycling performance.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An electrochemical apparatus comprising an electrode assembly; wherein
the electrode assembly comprises a positive electrode plate and a negative electrode plate; the positive electrode plate comprises a positive electrode current collector and a first positive electrode active material layer disposed on a surface of the positive electrode current collector; the negative electrode plate comprises a negative electrode current collector and a first negative electrode active material layer disposed on a surface of the negative electrode current collector; and the first negative electrode active material layer comprises a prelithiation region and an non-prelithiation region, the non-prelithiation region being a region located within a region of the first negative electrode active material layer and having no area overlapping with the prelithiation region;
the first negative electrode active material layer has a dimension of B₁ mm in a width direction, the first positive electrode active material layer has a dimension of B₂ mm in the width direction, and
a distance between an edge of the first negative electrode active material layer extending along a length direction and an adjacent edge of the prelithiation region extending along the length direction is B₄ mm, wherein 0.15 ≤ B₄ ≤ 1/2 × (B₁ - B₂) + 1.

2. The electrochemical apparatus according to claim 1, wherein the first negative electrode active material layer has a dimension of A₁ mm in the length direction, and the first positive electrode active material layer has a dimension of A₂ mm in the length direction; and
a distance between an edge of the first negative electrode active material layer extending along the width direction and an adjacent edge of the prelithiation region extending along the width direction is A₄ mm, wherein 0.15 ≤ A₄ ≤ 1/2 × (A₁ - A₂) + 1.

3. The electrochemical apparatus according to claim 1, wherein the prelithiation region has a dimension of B₃ mm in a width direction, wherein B₄ = (B₁ - B₃)/2.

4. The electrochemical apparatus according to claim 2, wherein the prelithiation region has a dimension of A₃ mm in a length direction, wherein A₄ = (A₁ - A₃)/2.

5. The electrochemical apparatus according to claim 1, wherein viewed from a thickness direction of the negative electrode plate, the prelithiation region has striped portions;
along an arrangement direction of multiple striped portions, the striped portion has a dimension of 0.1 mm to 2 mm; and/or
in the thickness direction of the negative electrode plate, the striped portion has a thickness of 0.04 µm to 0.5 µm.

6. The electrochemical apparatus according to claim 1, wherein a material of the prelithiation region comprises at least one of lithium carbonate, lithium oxide, lithium nitride, or lithium fluoride.

7. The electrochemical apparatus according to claim 1, wherein the first negative electrode active material layer comprises a negative electrode active material, the negative electrode active material comprising a silicon-based material.

8. The electrochemical apparatus according to claim 2, wherein the electrode assembly is a wound structure, the width direction is an extension direction of a short side of an unwound electrode plate, and the length direction is an extension direction of a long side of the unwound electrode plate, the electrode plate comprising the positive electrode plate and the negative electrode plate.

9. The electrochemical apparatus according to claim 8, wherein 0.15 ≤ A₄ ≤ 5, and 0.15 ≤ B₄ ≤ 1.75.

10. The electrochemical apparatus according to claim 2, wherein the electrode assembly is a stacked structure, the width direction is an extension direction of a short side of an electrode plate, and the length direction is an extension direction of a long side of the electrode plate, the electrode plate comprising the positive electrode plate and the negative electrode plate.

11. The electrochemical apparatus according to claim 10, wherein 0.15 ≤ A₄ ≤ 1.75, and 0.15 ≤ B₄ ≤ 1.6.

12. A method for manufacturing the electrochemical apparatus according to any one of claims 1 to 11, comprising the following steps:
providing the first negative electrode active material layer on the surface of the negative electrode current collector, and providing the prelithiation region and the non-prelithiation region on the first negative electrode active material layer to obtain the negative electrode plate;
providing the first positive electrode active material layer on the surface of the positive electrode current collector to obtain the positive electrode plate; and
assembling the negative electrode plate and the positive electrode plate to obtain the electrode assembly, and packaging the electrode assembly to obtain an electrochemical apparatus; wherein the first negative electrode active material layer faces the first positive electrode active material layer.

13. The manufacturing method according to claim 12, wherein the process of assembling the electrode assembly comprises: stacking the negative electrode plate and the positive electrode plate to obtain the electrode assembly, or stacking the negative electrode plate and the positive electrode plate and winding the resulting stack to obtain the electrode assembly.

14. The manufacturing method according to claim 12, wherein at least one of a lithium foil or lithium powder is used on the surface of the first negative electrode active material layer to provide the prelithiation region on the first negative electrode active material layer.

15. An electronic apparatus comprising the electrochemical apparatus according to any one of claims 1 to 11.
